# EUROPÄISCHE PATENTSCHRIFT

(11) **EP 2 405 154 B1**
(45) Veröffentlichungstag und Bekanntmachung des Hinweises auf die Patenterteilung: **27.03.2013**
(21) Anmeldenummer: 10168467.8
(22) Anmeldetag: 05.07.2010
(51) Int. Cl.: F16F 9/06, F16F 9/42

(54) **Dämpfungseinrichtung für Radfahrzeuge**
Dampening device for wheeled vehicles
Dispositif d'amortissement pour véhicules à roues

(43) Veröffentlichungstag der Anmeldung: 11.01.2012
(60) Teilanmeldung: 13152718.6
(73) Patentinhaber: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- WO-A1-98/34046
- WO-A1-2005/015384
- BE-A2- 901 894
- DE-A1- 2 446 643
- DE-A1- 19 849 429
- DE-U1- 9 204 861
- GB-A- 1 569 183
- NL-A- 9 120 027

## Beschreibung

Die vorliegende Erfindung betrifft gemäß dem Oberbegriff des Anspruchs 1 eine Dämpfungseinrichtung zur Stoß- und/oder Schwingungsdämpfung in Radfahrzeugen, mit mindestens einem teleskopartigen, hydraulischen Dämpferzylinder mit Dämpfungsmitteln für bei Einschub- und/oder Auszugbewegungen des Dämpferzylinders auftretende Hydraulikströmungen, wohei der Dämpferzylinder einen in einem Zylinder linear relativbeweglich geführten Kolben aufweist, der einseitig eine umfangsgemäß abgedichtet aus dem Zylinder nach außen geführte Kolbenstange aufweist und innerhalb des Zylinders einen die Kolbenstange umschließenden Ringraum von einem gegenüberliegenden Zylinderraum abteilt, wobei der Ringraum und der Zylinderraum mit einem hydraulischen Dämpfungsmedium gefüllt und über die Dämpfungsmittel miteinander sowie mit einem Ausgleichsraum verbunden sind.

Dazu sei an dieser Stelle bemerkt, dass der Ausgleichsraum bei den Dämpfungsbewegungen des Dämpferzylinders jeweils zur Aufnahme oder zur Abgabe eines bestimmten Volumenanteils des Dämpfungsmediums dient, wobei dieser Volumenanteil dem jeweiligen Volumen einer Teil-Länge der Kolbenstange entspricht, die jeweils in den Zylinder eingeschoben oder aus dem Zylinder herausgezogen wird. Derartige Dämpfungseinrichtungen der oben beschriebenen Art sind hinlänglich bekannt; lediglich beispielhaft sei hier auf die Veröffentlichungen DE 35 23 922 A1, DE 24 46 643 A1, EP 1 923 596 A1, EP 1 146 247 A1 sowie WO 03/102426 A1 und WO2005/015384 verwiesen.

Bei allen diesen Dämpfungseinrichtungen wird der Teleskop-Dämpferzylinder durch Rad-Federungsbewegungen alternierend eingeschoben und ausgezogen. Durch diese Teleskop-Bewegungen wird ein hydraulisches Dämpfungsmedium in Strömung versetzt, und diese Hydraulikströmungen werden über Dämpfungsmittel gedämpft bzw. über spezielle Dämpfungsventile gedrosselt. Hierbei entsteht durch eine innere Molekularreibung zwangsläufig Wärme, d. h. die jeweilige Drosselenergie wird in Wärme umgesetzt. Diese Wärmeentwicklung kann je nach Einsatzbedingungen (Hubfrequenz und/oder Hubgeschwindigkeit der Kolbenstange) so hoch sein, dass es zu einer Überhitzung und zu Störungen oder gar zu Schäden insbesondere im Bereich von Dichtungen kommen kann.

Darüber hinaus kann bei solchen Dämpfungseinrichtungen auch das Problem auftreten, dass bei sehr niedrigen Frost-Temperaturen die Dämpfungseigenschaften negativ beeinflusst werden, weil das hydraulische Dämpfungsmedium hinsichtlich seiner Viskosität temperaturabhängig ist.

Der vorliegenden Erfindung liegt die Aufgabe zu Grunde, eine Dämpfungseinrichtung der oben beschriebenen, gattungsgemäßen Art so zu verbessern, dass temperaturbedingte Störungen oder sogar Schäden vermieden werden.

Die Lösung der genannten Aufgabe besteht gemäß dem unabhängigen Anspruch 1 darin, dass die Kolbenstange als Kühlelement und dazu rohrartig mit einem axialen, vom Bereich des Kolbens ausgehenden und bis in die Nähe ihres aus dem Zylinder geführten Endes reichenden Hohlraum ausgebildet ist, wobei der Hohlraum mit dem Ringraum und/oder mit dem Zylinderraum hydraulisch verbunden und somit ebenfalls mit dem Hydraulikmedium gefüllt ist. Durch diese vorteilhafte Ausgestaltung befindet sich stets ein Teil des sich im Betrieb erwärmenden Dämpfungsmediums in dem Kolbenstangen-Hohlraum, und zwar auch in dem Bereich der Kolbenstange, der jeweils aus dem Zylinder nach außen ragt, und der deshalb unmittelbar von der Umgebungsluft umschlossen ist. Dadurch kann Wärme aus dem Dämpfungsmedium über die metallische Wandung der hohlen Kolbenstange effektiv an die Umgebung abgegeben werden. Indem der Hohlraum so weit wie - unter mechanischen Gesichtspunkten - möglich bis in die Nähe des außerhalb des Zylinders liegenden Endes der Kolbenstange reicht, wird eine maximale Wärmeübertragungsfläche mit maximaler Länge am Umfang der Kolbenstange gebildet.

In einer bevorzugten Ausgestattung ist zudem ein den Dämpferzylinder mantelartig umschließender, mit einem fluidischen Temperiermittel durchströmbarer Wärmetauscher vorgesehen. Durch diesen direkt auf dem Dämpferzylinder sitzenden Wärmetauscher kann insbesondere zur effektiven Kühlung ein geeignetes Kühlmittel geleitet (gepumpt) werden, so dass eine sehr effektive Wärmeabfuhr (Entwärmung) aus dem Dämpferzylinder erreicht wird. Alternativ kann durch den Wärmetauscher bei Bedarf auch ein Heizmittel, d. h. ein erwärmtes Medium, geleitet werden, um bei niedrigen Außentemperaturen dem Dämpferzylinder Wärme zuzuführen, damit durch entsprechende Einstellung der Viskosität des Dämpfungsmediums optimale Dämpfungseigenschaften gewährleistet werden können.

Weitere vorteilhafte Ausgestaltungsmerkmale der Erfindung sind in den abhängigen Ansprüchen sowie auch in der anschließenden Beschreibung enthalten.

Anhand eines in der Zeichnung veranschaulichten, bevorzugten Ausführungsbeispiels soll die Erfindung im Folgenden genauer erläutert werden. Dabei zeigen:
- Fig. 1: eine erfindungsgemäße Dämpfungseinrichtung im Axialschnitt mit teilweise weggebrochenen Bereichen,
- Fig. 2: eine schematische Ansicht in Pfeilrichtung II gemäß Fig. 1, jedoch mit Darstellung des in Fig. 1 weggebrochenen Bereiches,
- Fig. 3: eine gesonderte und vergrößerte Darstellung einer bevorzugten Ausführung eines Wärmetauschers im Axialschnitt,
- Fig. 4: einen vollständigen Axialschnitt der Dämpfungseinrichtung gemäß Fig. 1, jedoch ohne Wärmetauscher, und
- Fig. 5: eine vergrößerte Axialansicht auf den Wärmetauscher entsprechend der Darstellung in Fig. 2.

In den verschiedenen Figuren der Zeichnung sind gleiche Teile stets mit den gleichen Bezugszeichen versehen.

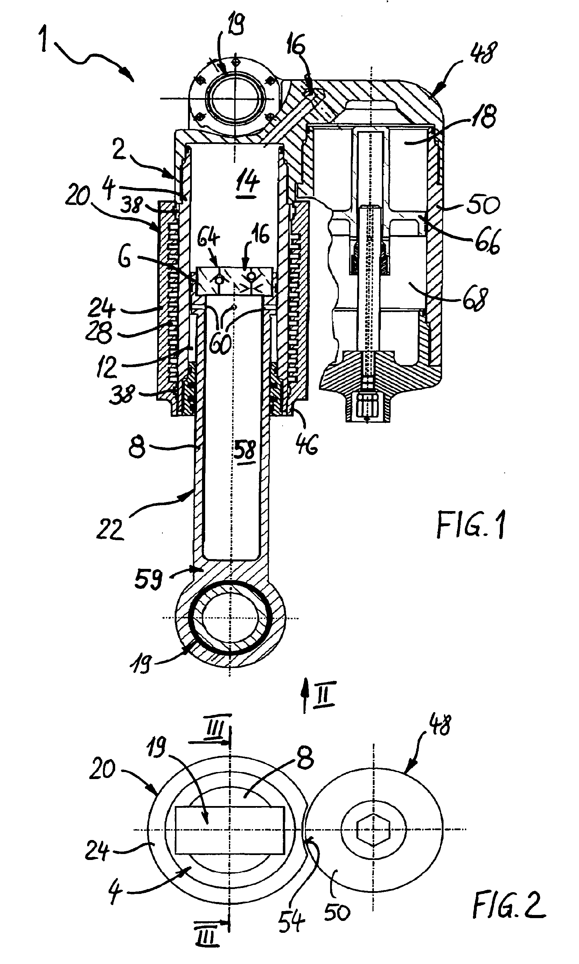

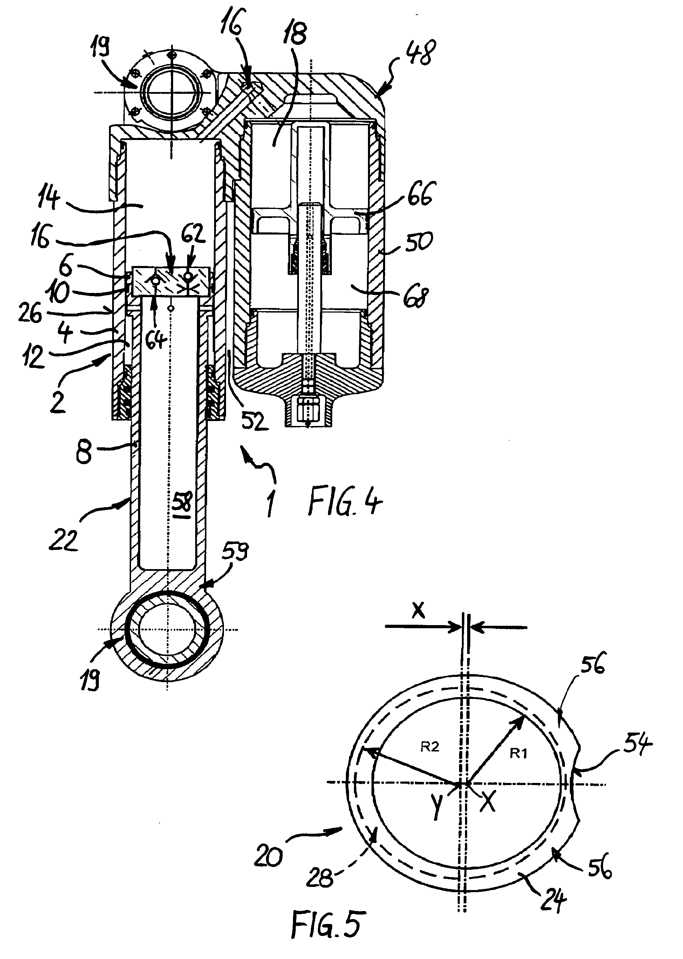

Eine erfindungsgemäße Dämpfungseinrichtung 1 dient zur Stoß- und/oder Schwingungsdämpfung von Rad-Federungsbewegungen in Fahrzeugen. Dazu besteht die Dämpfungseinrichtung 1 gemäß Fig. 1 und 4 aus (mindestens) einem teleskopartigen, hydraulischen Dämpferzylinder 2 mit einem in einem Zylinder 4 linear relativbeweglich geführten Kolben 6. Der Kolben 6 weist auf einer Seite eine umfangsgemäß abgedichtet aus dem Zylinder 4 nach außen geführte Kolbenstange 8 auf. Zudem ist der Kolben 6 mit einer umfangsgemäßen Kolbendichtung 10 (nur in Fig. 4 bezeichnet) ausgestattet, die dichtend an der Innenwandung des Zylinders 4 anliegt. Dadurch teilt der Kolben 6 innerhalb des Zylinders 4 einen die Kolbenstange 8 umschließenden Ringraum 12 von einem gegenüberliegenden Zylinderraum 14 ab. Der Ringraum 12 und der Zylinderraum 14 sind mit einem hydraulischen Dämpfungsmedium (Hydrauliköl) gefüllt und über Dämpfungsmittel 16 einerseits miteinander und andererseits mit einem Ausgleichsraum 18 hydraulisch verbunden.

An dem geschlossenen, der Kolbenstange 8 gegenüberliegenden Ende des Zylinders 4 einerseits sowie am freien Ende der Kolbenstange 8 andererseits ist jeweils ein Lagerelement 19 zur fahrzeugseitigen Anlenkung zwischen einem Rahmen und einem Rad bzw. einer Achse angeordnet.

Der Ausgleichsraum 18 dient bei den teleskopischen Dämpfungsbewegungen des Dämpferzylinders 2 jeweils zur Aufnahme oder zur Abgabe eines bestimmten Volumenanteils des Dämpfungsmediums, wobei dieser Volumenanteil dem jeweiligen Volumen einer Teil-Länge der Kolbenstange 8 entspricht, die jeweils in den Zylinder 4 eingeschoben oder aus dem Zylinder 4 herausgezogen wird. Beim Einschieben des Kolbens 6 in den Zylinder 4 (Einfederungsdämpfung) wird aus dem Zylinderraum 14 ein bestimmter Volumenanteil des Dämpfungsmediums verdrängt, und wegen des um den Querschnitt der Kolbenstange 8 reduzierten Ring-Querschnitts des Ringraums 12 kann dieser nicht das vollständige aus dem Zylinderraum 14 verdrängte Volumen aufnehmen. Die Volumendifferenz strömt daher in den Ausgleichsraum 18. Bei einer umgekehrten Auszugsbewegung (Ausfederungsdämpfung) strömt das Dämpfungsmedium anteilig aus dem Ringraum 12 und aus dem Ausgleichsraum 18 in den Zylinderraum 14. Die beschriebenen Strömungen werden über die Dämpfungsmittel 16 gedämpft (gedrosselt). Bevorzugt sind die Dämpfungsmittel 16 hierbei so ausgelegt, dass bei der Einschubbewegung (Einfederungsdämpfung) eine geringere Dämpfungskraft und bei der Auszugsbewegung (Ausfederungsdämpfung) eine höhere Dämpfungskraft zu überwinden ist.

Durch die beschriebene Dämpfung bzw. Drosselung der Hydraulikströmungen wird das hydraulische Dämpfungsmedium erwärmt. Im praktischen Einsatz kann unter bestimmten Betriebsbedingungen eine sehr hohe, teilweise unzulässig hohe Erwärmung auftreten.

Deshalb ist als eine bevorzugte Maßnahme ein Wärmetauscher 20 vorgesehen, der den Dämpferzylinder 2 unmittelbar mantelartig umschließt und mit einem fluidischen Temperiermittel durchströmbar ist.

In jedem Fall ist ober als erfindungsgemäße Maßnahme vorgesehen, die Kolbenstange 8 als Kühlelement 22 auszubilden.

Die beiden vorstehenden Maβnahmen werden im Folgenden einzeln genauer beschrieben.

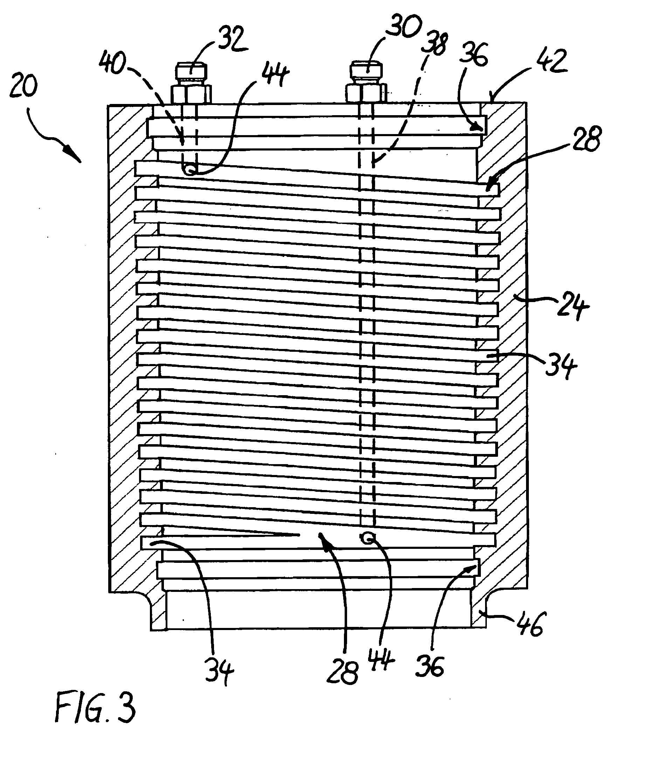

Was zunächst den bevorzugt vorhandenen Wärmetauscher 20 betrifft, so weist dieser einen hohlzylindrischen, rohrartigen Zylindermantel 24 auf, der unmittelbar auf einer äußeren Umfangsfläche 26 (s. Fig. 4) des Zylinders 4 sitzt. Der Wärmetauscher 20 weist (mindestens) einen Strömungskanal 28 mit einem Eingangsanschluss 30 und einem Ausgangsanschluss 32 für das Temperiermittel auf. Dazu wird insbesondere auf die gesonderte Darstellung in Fig. 3 verwiesen. Demnach verläuft der Strömungskanal 28 vorzugsweise in Umfangsrichtung und mit gleichmäßiger Flächenverteilung schraubenlinienförmig mit einer bestimmten Gewindesteigung zwischen axial gegenüberliegenden Endbereichen durch den Zylindermantel 24. Die Gewindesteigung ist gemäß Fig. 3 bevorzugt so ausgelegt, dass die jeweils zwischen zwei axial benachbarten Abschnitten des Strömungskanals 28 verbleibenden Materialbereiche bezüglich ihrer axialen Breite etwa derjenigen des Strömungskanals 28 entsprechen. Dieser schraubenlinienförmige Verlauf des Strömungskanals 28 wird dadurch ermöglicht, dass der Strömungskanal 28 durch eine auf der Innenseite des Zylindermantels 24 gebildete, radial nach innen zu dem Zylinder 4 hin offene und von der Zylinder-Umfangsfläche 26 weitgehend abgeschlossene Nut 34 gebildet ist. Bevorzugt weist die Nut 34 einen rechteckigen Nutquerschnitt auf. Die jeweils die Nut 34 begrenzenden Flanken definieren einen lichten Innendurchmesser (Radius R1 gemäß Fig. 5) des Wärmetauschers 20, der so an den Außendurchmesser des Zylinders 4 angepasst ist, dass der Wärmetauscher 20 axial auf den Zylinder 4 aufgeschoben werden kann. Dabei weist der Zylindermantel 24 beidseitig axial im Anschluss an den Strömungskanal 28 jeweils einen Dichtungsabschnitt 36 zur Aufnahme einer Umfangsdichtung 38 auf, mit der jeweils ein Ringspalt zwischen dem Wärmetauscher 20 und dem Zylinder 4 nach außen abgedichtet wird.

Durch diese vorteilhafte Ausgestaltung kann ein durch den Strömungskanal 28 fließendes Temperiermittel mit sehr großer Flächenüberdeckung unmittelbar über die Umfangsfläche 26 des Zylinders 4 strömen, wodurch eine effektive Wärmeübertragung gewährleistet ist.

Wie sich weiterhin aus Fig. 3 ergibt, münden der Eingangsanschluss 30 und der Ausgangsanschluss 32 jeweils über durch den Zylindermantel 24 verlaufende Anschlusskanäle 38, 40 in gegenüberliegende Endbereiche des Strömungskanals 28. Mit Vorteil sind hierbei beide Anschlüsse 30 und 32 auf ein und derselben Stirnseite 42 des Wärmetauschers 20 angeordnet. Hierzu verlaufen die Anschlusskanäle 38, 40 axial bzw. achsparallel durch das Material des Zylindermantels 24 und münden jeweils über Querbohrungen 44 in den Strömungskanal 28 bzw. in den Bereich der Nut 34.

An dieser Stelle sei nochmals bemerkt, dass der Wärmetauscher 20 insbesondere zum Zwecke der Kühlung mit einem geeigneten Kühlmittel durchströmbar ist. Der Wärmetauscher 20 kann jedoch auch zum Erwärmen im Durchlauf mit einem Heizmittel betrieben werden.

Insbesondere für die Kühlung kann der Wärmetauscher 20 als Gleichstromtauscher oder als Gegenstromtauscher betrieben werden. Für einen Wärmetausch im Gleichstrom wird eine kalte Flüssigkeit an der kälteren Seite des Dämpferzylinders 2 in den Tauscher 20 gepumpt, so dass sich die Kühlflüssigkeit während der Strömung zur heißeren Seite hin erwärmt. Bei einem Wärmetausch im Gegenstrom wird die kalte Flüssigkeit an der heißeren Seite des Zylinders 4 in den Wärmetauscher 20 gepumpt. Dieser Gegenstrombetrieb ist die bevorzugte, zweckmäßigere Betriebsart, da der Dämpferzylinder 2 bzw. der Zylinder 4 seine höchste Temperatur an der Austrittsstelle der Kolbenstange 8 aus dem Zylinder 4 hat. Hier kommt zu der Wärme des Dämpfungsmediums noch die Reibungswärme der Kolbenstange 8 zu einer Führungsbuchse am Zylinderaustritt hinzu. Im Gegenstrom trifft somit die kalte Kühlflüssigkeit auf die heißeste Stelle, so dass eine große Temperaturdifferenz vorhanden ist. Hierdurch wird eine große Wärmemenge übertragen.

Wird demgegenüber die kalte Flüssigkeit an der kälteren Seite des Zylinders 4 in den Wärmetauscher 20 eingeleitet, so ist die Temperaturdifferenz geringer. Entsprechendes gilt dann auch für die Wärmeübertragung.

Mit dem dem Wärmetauscher 20 sind grundsätzlich beide Betriebsarten wahlweise möglich; bei umgekehrter Durchströmung würde lediglich der Ausgangsanschluss 32 als Eingang und der Eingangsanschluss 30 als Auslass verwendet.

In weiterer zweckmäßiger Ausgestaltung weist der Zylindermantel 24 des Wärmetauschers 20 insbesondere auf seiner der die Anschlüsse 30, 32 aufweisenden Stirnseite 42 gegenüberliegenden, der Kolbenstange 8 zugewandten Seite einen axial vorspringenden Rohransatz 46 mit einem derart an den Zylinder 4 und dessen Außendurchmesser angepassten Innendurchmesser auf, dass der Wärmetauscher 20 über den Rohransatz 46 mit Presspassung kraftschlüssig auf dem Zylinder 4 gehalten ist. Gemäß Fig. 1 sitzt dann der Wärmetauscher 20 mit dem Rohransatz 46 bündig im Endbereich des Zylinders 4. Durch diese Ausgestaltung wird eine sehr einfache Montage durch einfaches Aufstecken und Aufpressen des Wärmetauschers 20 auf den Zylinder 4 ohne zusätzliche Montageelemente ermöglicht.

Wie sich weiterhin aus Fig. 1 und 4 ergibt, ist bei der bevorzugten Ausführung der Dämpfungseinrichtung 1 vorgesehen, dass der Dämpferzylinder 2 auf seiner der Kolbenstange 8 gegenüberliegenden, geschlossenen Seite fest mit einem Speicher 48 verbunden ist, der den Ausgleichsraum 18 enthält. Hierbei weist der Speicher 48 ein zylindrisches Gehäuse 50 auf, welches seitlich mit einem Spaltabstand 52 parallel neben dem Zylinder 4 angeordnet ist. Hierzu wird besonders auf Fig. 4 verwiesen.

In Anpassung an diese bevorzugte Ausführung weist der Wärmetauscher 20 im Bereich des Speichers 48 bzw. dessen Gehäuses 50 am Außenumfang eine äußere Ausnehmung 54 auf; siehe dazu insbesondere Fig. 2 und 5. Diese Ausnehmung 54 ist gemäß Fig. 2 bezüglich ihrer Kontur an die Außenkontur des Gehäuses 50 des Speichers 48 angepasst. Die Ausnehmung 54 reduziert somit die radiale Dicke des Zylindermantels 24 so weit, dass sie maximal dem zur Verfügung stehenden Spaltabstand 52 zwischen dem Zylinder 4 und dem Speichergehäuse 50 entspricht.

In weiterer bevorzugter Ausgestaltung ist hierbei gemäß Fig. 5 vorgesehen, dass die den Strömungskanal 28 bildende, schraubenlinienförmige Nut 34 mit ihrem Nutgrund einen Zylinder mit einem Radius R2 definiert, dessen Zylinderachse Y gegenüber der Längsmittelachse X des den Innenradius R1 aufweisenden Zylindermantels 24 um einen Versatz x von der äußeren Ausnehmung 54 weg versetzt ist. Somit verläuft die schraubenlinienförmige Nut 34 exzentrisch durch den Wärmetauscher 20 bzw. den Zylindermantel 24. Diese Maßnahme dient dazu, um auch im Bereich der Ausnehmung 54 (Fig. 5) noch ausreichend Wandstärke gegenüber der Nut 34 nach außen zu gewährleisten.

Bei dieser exzentrischen Ausgestaltung ist zudem bevorzugt vorgesehen, dass die Anschlusskanäle 38, 40 mit den Anschlüssen 30, 32 in Umfangsbereichen angeordnet sind, in denen der Zylindermantel 24 radial zwischen dem Nutgrund der Nut 34 und der äußeren Umfangsfläche seine größere Dicke aufweist. Diese Bereiche sind beispielhaft in Fig. 5 mit der Bezugsziffer 56 angedeutet.

Es sei noch bemerkt, dass der Wärmetauscher 20 bezüglich seiner axialen Länge derart an den Dämpferzylinder 2 angepasst ist, dass er zumindest einen in der Praxis zu erwartenden Hubbewegungsbereich des Kolbens 6 weitgehend überdeckt. Vorzugsweise erstreckt sich der Wärmetauscher 20 aber nahezu vollständig über die zur Verfügung stehende Länge des Zylinders 4, im dargestellten Ausführungsbeispiel somit vom freien Ende des Zylinders 4 bis zum mechanischen Übergang zwischen dem Zylinder 4 und dem Speicher 48, siehe dazu Fig. 1.

Was nun den Erfindungskomplex der als Kühlelement 22 ausgebildeten Kolbenstange 8 betrifft, so ist dazu vorgesehen, dass die Kolbenstange 8 rohrartig mit einem axialen, vom Bereich des Kolbens 6 ausgehenden Hohlraum 58 ausgebildet ist, wobei sich der Hohlraum 58 erfindungsgemäß bis in die Nähe des aus dem Zylinder 4 geführten Endes 59 der Kolbenstange 8 und bis kurz vor das Lagerelement 19 erstreckt. Hierbei ist der Hohlraum 58 ebenfalls mit dem hydraulischen Dämpfungsmedium gefüllt und mit dem Ringraum 12 und/oder dem Zylinderraum 14 hydraulisch verbunden. Bevorzugt ist dazu der Hohlraum 58 einerseits direkt über Querbohrungen 60 im Bereich des Kolbens 6 mit dem Ringraum 12 und andererseits indirekt über Dämpfungsmittel 16 im Bereich des Kolbens 6 mit dem Zylinderraum 14 verbunden.

Die Dämpfungsmittel 16 im Bereich des Kolbens 6 zwischen dem Zylinderraum 14 und dem Kolbenstangen-Hohlraum 58 umfassen einerseits ein Drosselventil 62 für eine Hydraulikströmung aus dem Hohlraum 58 in den Zylinderraum 14 und andererseits ein Rückschlagventil 64, welches für eine umgekehrte Strömung öffnet. Zudem sind als Dämpfungsmittel 16 in der hydraulischen Verbindung zwischen dem Zylinderraum 14 und dem Ausgleichsraum 18 entsprechende, nicht genauer dargestellte Ventile vorgesehen.

Die durch die Drosselung der Hydraulikströmung im Bereich des Kolbens 6 und der dort vorgesehenen Dämpfungsmittel 16 entstehende Wärme wird zu einem großen Anteil effektiv aus dem Hohlraum 58 über die Wandung der Kolbenstange 8 nach außen abgegeben.

Was noch den Speicher 48 betrifft, so ist dieser bevorzugt als hydropneumatischer Federspeicher ausgebildet, wobei der Ausgleichsraum 18 über ein Trennelement, insbesondere über einen frei verschiebbaren Trennkolben 66, von einer Federkammer 68 getrennt ist, die ein pneumatisches, unter Druck stehendes Federmedium enthält. Der Druck des Federmediums in der Federkammer 68 wirkt über den Trennkolben 66 und hydraulisch über den Ausgleichsraum 18 und den Zylinderraum 14 auch auf den Kolben 6, wodurch eine Tragfederkraft des Dämpferzylinders 2 erzeugt wird. Hierdurch wirkt der Dämpferzylinder 2 zusätzlich auch als Federbein ohne mechanische Feder.

Die in Fig. 1 und 4 dargestellte, spezielle Ausgestaltung des Speichers 48 ist nicht Gegenstand der vorliegenden Erfindung, sie ist aber in der älteren europäischen Patentanmeldung EP 09168192.4 , Veröffentlichung EP2287492 A1,enthalten, auf die in vollem Umfang Bezug genommen wird.

Abschließend soll noch kurz die Funktion der erfindungsgemäßen Dämpfungseinrichtung 1 erläutert werden. Wenn ausgehend von der in Fig. 1 und 4 dargestellten statischen Lage der Kolben 6 über die Kolbenstange 8 in den Zylinder 4 eingeschoben wird (Einfederung), so wird ein bestimmtes Volumen des hydraulischen Dämpfungsmediums aus dem Zylinderraum 14 verdrängt. Dieses Volumen strömt anteilig über das Rückschlagventil 64, und zwar nahezu ohne Dämpfung, in den Hohlraum 58 der Kolbenstange 8 und von hier durch die Querbohrungen 60 in den Ringraum 12. Ein weiterer Volumenanteil, der dem Volumen des verschobenen Abschnittes der Kolbenstange 8 entspricht, strömt in den Ausgleichsraum 18. Die Einfederung erfolgt mit einer geringen Dämpfungskraft. Eine umgekehrte Ausfederungsbewegung wird demgegenüber stärker gedämpft. Bei einer Auszugbewegung des Kolbens 6 über die Kolbenstange 8 aus dem Zylinder 4 wird ein Teilvolumen aus dem sich verkleinernden Ringraum 12 und über den Hohlraum 58 durch das Drosselventil 62 zurück in den Zylinderraum 14 verdrängt. Die Strömung muss über das Drosselventil 42 fließen, weil das Rückschlagventil 64 in dieser Strömungsrichtung schließt. Ein weiterer Volumenanteil strömt aus dem Ausgleichsraum 18 mit einer entsprechenden Dämpfung über die Dämpfungsmittel 16 in den Zylinderraum 14. Die bei der Dämpfung insbesondere im Bereich des Kolbens 6 erzeugte Wärme sowie auch die Reibungswärme im Bereich der Kolbenstangenführung des Zylinders 4 wird effektiv über die als Kühlelement 22 fungierende Kolbenstange 8 und gegebenen falls über den Optionalen Wärmetauscher 20 abgefürt.

Der Schutrumfung wird durch die Ansprüche beschrieben.

## Patentansprüche

1. Dämpfungseinrichtung (1) zur Stoß- und/oder Schwingungsdämpfung in Radfahrzeugen, mit mindestens einem teleskopartigen, hydraulischen Dämpferzylinder (2) mit Dämpfungsmitteln (16) für bei Einschub- und/oder Auszugbewegungen des Dämpferzylinders (2) auftretende Hydraulikströmungen, wobei der Dämpferzylinder (2) einen in einem Zylinder (4) relativbeweglich geführten Kolben (6) aufweist, der einseitig eine umfangsgemäß abgedichtet aus dem Zylinder (4) nach außen geführte Kolbenstange (8) aufweist und innerhalb des Zylinders (4) einen die Kolbenstange (8) umschließenden Ringraum (12) von einem gegenüberliegenden Zylinderraum (14) abteilt, wobei der Ringraum (12) und der Zylinderraum (14) mit einem hydraulischen Dämpfungsmedium gefüllt und über die Dämpfungsmittel (16) miteinander sowie mit einem Ausgleichsraum (18) verbunden sind,
**dadurch gekennzeichnet, dass** die Kolbenstange (8) als Kühlelement (22) und dazu rohrartig mit einem axialen, vom Bereich des Kolbens (6) ausgehenden und bis in die Nähe ihres aus dem Zylinder (4) geführten Endes (59) reichenden Hohlraum (58) ausgebildet ist, wobei der Hohlraum (58) mit dem Ringraum (12) und/oder dem Zylinderraum (14) hydraulisch verbunden ist.

2. Dämpfungseinrichtung nach Anspruch 1,
**dadurch gekennzeichnet, dass** der Hohlraum (58) der Kolbenstange (8) einerseits über Querbohrungen (60) im Bereich des Kolbens (6) mit dem Ringraum (12) und andererseits über Dämpfungsmittel (16) im Bereich des Kolbens (6) mit dem Zylinderraum (14) verbunden ist.

3. Dämpfungseinrichtung nach Anspruch 1 oder 2,
**gekennzeichnet durch** einen den Dämpferzylinder (2) mantelartig umschließenden, mit einem fluidischen Temperiermittel durchströmbaren Wärmetauscher (20).

4. Dämpfungseinrichtung nach Anspruch 3,
**dadurch gekennzeichnet, dass** der Wärmetauscher (20) einen hohlzylindrischen, rohrartigen Zylindermantel (24) aufweist, der unmittelbar auf einer äußeren Umfangsfläche (26) des Zylinders (4) sitzt, wobei der Wärmetauscher (20) mindestens einen Strömungskanal (28) mit einem Eingangsanschluss (30) und einem Ausgangsanschluss (32) für das Temperiermittel aufweist.

5. Dämpfungseinrichtung nach Anspruch 4,
**dadurch gekennzeichnet, dass** der Strömungskanal (28) des Wärmetauschers (20) in Umfangsrichtung und mit gleichmäßiger Flächenverteilung schraubenlinienförmig zwischen axial gegenüberliegenden Endbereichen durch den Zylindermantel (24) verläuft.

6. Dämpfungseinrichtung nach Anspruch 4 oder 5,
**dadurch gekennzeichnet, dass** der Strömungskanal (28) durch eine auf der Innenseite des Zylindermantels (24) gebildete, radial nach innen zu dem Zylinder (4) hin offene und von der Zylinder-Umfangsfläche (26) abgeschlossene Nut (34) gebildet ist, wobei der Zylindermantel (24) beidseitig axial im Anschluss an den Strömungskanal (28) jeweils einen Dichtungsabschnitt (36) mit einer Umfangsdichtung (38) zum Abdichten eines Ringspaltes zwischen dem Wärmetauscher (20) und dem Zylinder (4) aufweist.

7. Dämpfungseinrichtung nach einem der Ansprüche 4 bis 6,
**dadurch gekennzeichnet, dass** der Eingangsanschluss (30) und der Ausgangsanschluss (32) über durch den Zylindermantel (24) des Wärmetauschers (20) verlaufende Anschlusskanäle (38, 40) in gegenüberliegende Endbereiche des Strömungskanals (28) münden.

8. Dämpfungseinrichtung nach Anspruch 7,
**dadurch gekennzeichnet, dass** der Eingangsanschluss (30) und der Ausgangsanschluss (32) auf einer Stirnseite (42) des Wärmetauschers (20) angeordnet sind, wobei die Anschlusskanäle (38, 40) achsparallel durch den Zylindermantel (24) verlaufen und über Querbohrungen (44) in den Strömungskanal (28) münden.

9. Dämpfungseinrichtung nach einem der Ansprüche 4 bis 8,
**dadurch gekennzeichnet, dass** der Zylindermantel (24) des Wärmetauschers (20) auf einer Seite, vorzugsweise auf der den Anschlüssen (30, 32) axial gegenüberliegenden, der Kolbenstange (8) zugewandten Seite, einen Rohransatz (46) mit einem derart an den Zylinder (4) und dessen Außendurchmesser angepassten Innendurchmesser aufweist, dass der Wärmetauscher (20) über den Rohransatz (46) mit Presspassung kraftschlüssig auf dem Zylinder (4) gehalten ist.

10. Dämpfungseinrichtung nach einem der Ansprüche 6 bis 9,
**dadurch gekennzeichnet, dass** der Dämpferzylinder (2) auf seiner der Kolbenstange (8) gegenüberliegenden Seite fest mit einem, seitlich mit einem Spaltabstand (52) neben dem Zylinder (4) angeordneten Speicher (48) verbunden ist, wobei der Wärmetauscher (20) im Bereich des Speichers (48) eine äußere Ausnehmung (54) aufweist.

11. Dämpfungseinrichtung nach Anspruch 10,
**dadurch gekennzeichnet, dass** die den Strömungskanal (28) bildende, schraubenlinienförmige Nut (34) mit ihrem Nutgrund einen Zylinder definiert, dessen Zylinderachse (Y) gegenüber der Längsmittelachse (X) des Zylindermantels (24) um einen Versatz (x) von der äußeren Ausnehmung (54) weg versetzt ist.

12. Dämpfungseinrichtung nach Anspruch 10 oder 11,
**dadurch gekennzeichnet, dass** der Speicher (48) den hydraulisch mit dem Zylinderraum (14) verbundenen Ausgleichsraum (18) enthält, und dass die Dämpfungsmittel (16) Drosselventile (62) im Bereich der hydraulischen Verbindung zwischen dem Ringraum (12) und dem Zylinderraum (14) im Bereich des Kolbens (6) und/oder im Bereich der hydraulischen Verbindung zwischen dem Zylinderraum (14) und dem Ausgleichsraum (18) umfassen.

13. Dämpfungseinrichtung nach einem der Ansprüche 3 bis 12,
**dadurch gekennzeichnet, dass** der Wärmetauscher (20) bezüglich seiner axialen Länge derart an den Dämpferzylinder (2) angepasst ist, dass er zumindest einen in der Praxis zu erwartenden Hubbewegungsbereich des Kolbens (6) weitgehend überdeckt.

## Claims

1. A damping device (1) for shock- and/or vibration damping in wheeled vehicles, having at least one telescope-like, hydraulic damper cylinder (2) with damping means (16) for hydraulic flows arising upon insertion and/or withdrawal movements of the damper cylinder (2), wherein the damper cylinder (2) has a piston (6), guided in a relatively movable manner in a cylinder (4), which at one end has a piston rod (8) guided outwards from the cylinder (4) in a circumferentially sealed manner and which within the cylinder (4) separates an annular chamber (12) surrounding the piston rod (8) from an opposite cylinder chamber (14), wherein the annular chamber (12) and the cylinder chamber (14) are filled with an hydraulic damping medium and via the damping means (16) are connected to one another and to an equalising chamber (18), **characterised in that** the piston rod (8) is in the form of a cooling element (22) and for that purpose is pipe-like with an axial hollow chamber (58) issuing from the region of the piston (6) and extending right into the vicinity of its end (59) guided out of the cylinder (4), wherein the hollow chamber (58) is hydraulically connected to the annular chamber (12) and/or the cylinder chamber (14).

2. A damping device according to claim 1, **characterised in that** the hollow chamber (58) of the piston rod (8) is connected on the one hand via transverse bores (60) in the region of the piston (6) to the annular chamber (12) and on the other hand via damping means (16) in the region of the piston (6) to the cylinder chamber (14).

3. A damping device according to claim 1 or 2, **characterised by** a heat exchanger (20) which surrounds the damper cylinder (2) in a jacket-like manner and though which there can flow a fluidic tempering means.

4. A damping device according to claim 3, **characterised in that** the heat exchanger (20) has a hollow-cylindrical, pipe-like cylinder jacket (24) located directly on an outer circumferential surface (26) of the cylinder (4), wherein the heat exchanger (20) has at least one flow channel (28) with an inlet connection (30) and an outlet connection (32) for the tempering means.

5. A damping device according to claim 4, **characterised in that** the flow channel (28) of the heat exchanger (20) runs through the cylinder jacket (24), in a circumferential direction and with uniform surface distribution, helically between axially opposite end regions.

6. A damping device according to claim 4 or 5, **characterised in that** the flow channel (28) is formed by a groove (34), formed on the inner side of the cylinder jacket (24), open radially inwards towards the cylinder (4) and closed by the cylinder circumferential surface (26), wherein at both ends and axially subsequent to the flow channel (28), the cylinder jacket (24) has in each case a sealing portion (36) with a circumferential seal (38) to seal an annular gap between the heat exchanger (20) and the cylinder (4).

7. A damping device according to any one of claims 4 to 6, **characterised in that** the inlet connection (30) and the outlet connection (32) open into opposite end regions of the flow channel (28) via connection channels (38, 40) running through the cylinder jacket (24) of the heat exchanger (20).

8. A damping device according to claim 7, **characterised in that** the inlet connection (30) and the outlet connection (32) are arranged on an end face (42) of the heat exchanger (20), wherein the connection channels (38, 40) run through the cylinder jacket (24) in an axially parallel manner and open into the flow channel (28) via transverse bores (44).

9. A damping device according to any one of claims 4 to 8, **characterised in that** the cylinder jacket (24) of the heat exchanger (20) has at one end, preferably at the end axially opposite the connections (30, 32) and facing the piston rod (8), a flanged socket (46) with an inner diameter adapted to the cylinder (4) and its outer diameter in such a manner that the heat exchanger (20) is held, via the flanged socket (46), on the cylinder (4) in a force-locked manner with a press fit.

10. A damping device according to any one of claims 6 to 9, **characterised in that** the damper cylinder (2) is, at its end opposite the piston rod (8), securely connected to an accumulator (48) arranged laterally next to the cylinder (4) with a gap clearance (52), wherein the heat exchanger (20) has an outer recess (54) in the region of the accumulator (48).

11. A damping device according to claim 10, **characterised in that** the helical groove (34) forming the flow channel (28) defines a cylinder with its groove base, the cylinder axis (Y) of which cylinder is with respect to the longitudinal central axis (X) of the cylinder jacket (24) offset away from the outer recess (54) by an offset (x).

12. A damping device according to claim 10 or 11, **characterised in that** the accumulator (48) contains the equalising chamber (18) hydraulically connected to the cylinder chamber (14), and **in that** the damping means (16) comprise throttle valves (62) in the region of the hydraulic connection between the annular chamber (12) and the cylinder chamber (14) in the region of the piston (6) and/or in the region of the hydraulic connection between the cylinder chamber (14) and the equalising chamber (18).

13. A damping device according to any one of claims 3 to 12, **characterised in that** the heat exchanger (20) is with regard to its axial length adapted to the damper cylinder (2) in such a manner that it substantially covers at least a lifting motion range of the piston (6) which is to be expected in practice.

## Revendications

1. Dispositif d'amortissement (1 ) destiné à amortir les chocs et/ou les vibrations dans des véhicules à roues, comprenant au moins un vérin d'amortisseur (2) télescopique, hydraulique et doté de moyens d'amortissement (16) pour des écoulements hydrauliques se produisant lorsque le vérin d'amortisseur (2) effectue des mouvements d'entrée et/ou de sortie, dans lequel le vérin d'amortisseur (2) comprend un piston (6) guidé relativement mobile dans un cylindre (4) et comporte d'une part une tige de piston (8) guidée vers l'extérieur en sortant du cylindre (4) en étant étanchéifiée sur la circonférence et séparant à l'intérieur du cylindre (4) une chambre annulaire (12) entourant la tige de piston (8) d'une chambre de cylindre (14) opposée, la chambre annulaire (12) et la chambre de cylindre (14) étant remplies d'un milieu d'amortissement hydraulique et étant reliées ensemble et à une chambre de compensation (18) à l'aide des moyens d'amortissement (16),
**caractérisé en ce que** la tige de piston (8) est conçue comme un élément de refroidissement (22) et est dotée à cet effet d'une cavité (58) réalisée en forme de tube présentant un axe, partant de la zone du piston (6) et parvenant jusqu'à proximité de l'extrémité (59) de la tige guidée à l'extérieur du cylindre (4), dans lequel la cavité (58) est reliée hydrauliquement à la chambre annulaire (12) et/ou à la chambre de cylindre (14).

2. Dispositif d'amortissement selon la revendication 1,
**caractérisé en ce que** la cavité (58) de la tige de piston (8) est reliée d'une part par des trous transversaux (60) dans la zone du piston (6) à la chambre annulaire (12) et d'autre part par des moyens d'amortissement (16) dans la zone du piston (6) à la chambre de cylindre (14).

3. Dispositif d'amortissement selon la revendication 1 ou 2,
**caractérisé par** un échangeur de chaleur (20) entourant le cylindre d'amortisseur (2) à la manière d'une enveloppe et pouvant être traversé par un moyen de thermorégulation fluidique.

4. Dispositif d'amortissement selon la revendication 3,
**caractérisé en ce que** l'échangeur de chaleur (20) comprend une enveloppe de cylindre (24) tubulaire et de forme cylindrique creuse reposant directement sur une surface circonférentielle extérieure (26) du cylindre (4), dans lequel l'échangeur de chaleur (20) comprend au moins un canal d'écoulement (28) doté d'un raccord d'entrée (30) et d'un raccord de sortie (32) pour le moyen de thermorégulation.

5. Dispositif d'amortissement selon la revendication 4,
**caractérisé en ce que** le canal d'écoulement (28) de l'échangeur de chaleur (20) s'étend à travers l'enveloppe de cylindre (24) dans la direction circonférentielle, de façon hélicoïdale et en étant réparti régulièrement sur la surface entre deux zones d'extrémité axialement opposées.

6. Dispositif d'amortissement selon la revendication 4 ou 5,
**caractérisé en ce que** le canal d'écoulement (28) est formé par une rainure (34) formée sur la face intérieure de l'enveloppe de cylindre (24), ouverte radialement vers l'intérieur en direction du cylindre (4) et terminée par la surface circonférentielle de cylindre (26), l'enveloppe de cylindre (24) comprenant de part et d'autre axialement immédiatement après le canal d'écoulement (28) respectivement un segment d'étanchéité (36) doté d'un joint circonférentiel (38) destiné à étanchéifier une chambre annulaire entre l'échangeur de chaleur (20) et le cylindre (4).

7. Dispositif d'amortissement selon l'une quelconque des revendications 4 à 6,
**caractérisé en ce que** le raccord d'entrée (30) et le raccord de sortie (32) débouchent par l'intermédiaire de canaux de raccordement (38, 40) s'étendant à travers l'enveloppe de cylindre (24) de l'échangeur de chaleur (20) dans des zones d'extrémité opposées du canal d'écoulement (28).

8. Dispositif d'amortissement selon la revendication 7,
**caractérisé en ce que** le raccord d'entrée (30) et le raccord de sortie (32) sont disposés sur une face avant (42) de l'échangeur de chaleur (20), les canaux de raccordement (38, 40) s'étendant en parallélisme axial à travers l'enveloppe de cylindre (24) et débouchant par des trous transversaux (44) dans le canal d'écoulement (28).

9. Dispositif d'amortissement selon l'une quelconque des revendications 4 à 8,
**caractérisé en ce que** l'enveloppe de cylindre (24) de l'échangeur de chaleur (20) comprend sur une face, de préférence sur la face axialement opposée aux raccords (30, 32) et tournée vers la tige de piston (8), un épaulement tubulaire (46) dont le diamètre intérieur est adapté au cylindre (4) et au diamètre extérieur de celui-ci, de telle sorte que l'échangeur de chaleur (20) soit retenu à force sur le cylindre (4) avec un ajustage serré par l'intermédiaire de l'épaulement tubulaire (46).

10. Dispositif d'amortissement selon l'une quelconque des revendications 6 à 9,
**caractérisé en ce que** le cylindre d'amortisseur (2) est relié fixement sur sa face opposée à la tige de piston (8) à un accumulateur (48) disposé à côté du cylindre (4) et latéralement en formant une fente d'écartement (52), l'échangeur de chaleur (20) comprenant dans la zone de l'accumulateur (48) un évidement extérieur (54).

11. Dispositif d'amortissement selon la revendication 10,
**caractérisé en ce que** la rainure (34) hélicoïdale formant le canal d'écoulement (28) définit avec sa base un cylindre dont l'axe (Y) est décalé, par rapport à l'axe longitudinal médian (X) de l'enveloppe de cylindre (24), d'un décalage (x) par rapport à l'évidement extérieur (54).

12. Dispositif d'amortissement selon la revendication 10 ou 11,
**caractérisé en ce que** l'accumulateur (48) contient la chambre de compensation (18) reliée hydrauliquement à la chambre de cylindre (14), et **en ce que** les moyens d'amortissement (16) comprennent des soupapes d'étranglement (62) dans la zone de la liaison hydraulique entre la chambre annulaire (12) et la chambre de cylindre (14) dans la zone du piston (6) et/ou dans la zone de la liaison hydraulique entre la chambre de cylindre (14) et la chambre de compensation (18).

13. Dispositif d'amortissement selon l'une quelconque des revendications 3 à 12,
**caractérisé en ce que** la longueur axiale de l'échangeur de chaleur (20) est adaptée au cylindre d'amortisseur (2), de telle sorte que l'échangeur recouvre en grande partie au moins une zone de déplacement de levée du piston (6) escomptée dans la pratique.
